(19) Europäisches Patentamt
European Patent Office
Office européen des brevets

(11) Numéro de publication : **0 470 142 B1**

# (12) FASCICULE DE BREVET EUROPEEN

(45) Date de publication du fascicule du brevet : **07.07.93 Bulletin 93/27**

(51) Int. Cl.[5] : **B65G 69/04**

(21) Numéro de dépôt : **90907099.7**

(22) Date de dépôt : **19.04.90**

(86) Numéro de dépôt international : **PCT/FR90/00284**

(87) Numéro de publication internationale : **WO 90/12746 01.11.90 Gazette 90/25**

## (54) APPAREILLAGE POUR LE REMPLISSAGE D'UN RECIPIENT PAR UN PRODUIT SOLIDE DIVISE.

(30) Priorité : **27.04.89 FR 8905780**
**27.07.89 FR 8910287**
**12.10.89 FR 8913469**

(43) Date de publication de la demande : **12.02.92 Bulletin 92/07**

(45) Mention de la délivrance du brevet : **07.07.93 Bulletin 93/27**

(84) Etats contractants désignés : **AT BE DE ES GB IT NL SE**

(56) Documents cités :
**BE-A- 899 420**
**DE-A- 2 703 329**
**GB-A- 2 168 330**
**NL-A- 6 508 550**

(73) Titulaire : **INSTITUT FRANCAIS DU PETROLE**
**4, avenue de Bois Préau**
**F-92502 Rueil-Malmaison (FR)**

(72) Inventeur : **POUSSIN, Bernard**
**5, rue de la Ferme**
**F-78420 Carrières-sur-Seine (FR)**
Inventeur : **LUMBROSO, Daniel**
**50, avenue Lavoisier**
**F-92500 Rueil-Malmaison (FR)**

(74) Mandataire : **Andreeff, François**
**INSTITUT FRANCAIS DU PETROLE 4, avenue de Bois-Préau**
**F-92502 Rueil-Malmaison (FR)**

**EP 0 470 142 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

Le remplissage des récipients par des particules solides (solides granuleux) s'effectue généralement par un transvasement du solide à l'aide d'une trémie et/ou d'une manche, soit manuellement, soit mécaniquement, soit par transfert pneumatique.

En règle générale, il est d'un intérêt majeur d'introduire le maximum de produit dans un volume donné, et ceci aussi bien pour diminue le coût du stockage, que pour d'autres motifs spécifiques, comme par exemple homogénéiser ce stockage ou diminuer le volume d'air ou de gaz du conteneur. L'objet de la présente invention est de définir un appareillage qui permet de réaliser un accroissement de la quantité de solide introduite dans un certain volume.

Les stockages usuels concernent les grains de céréales (silos), de produits alimentaires destinés à la consommation ou au bétail, à l'agroalimentaire, aux engrais, aux produits chimiques, aux granulés de plastique, aux produits pharmaceutiques et/ou cosmétiques, et tout autre solide divisé (grains ou dragées, ou granulés extrudés, comprimés, agglomérés, concassés, etc). Leur autre domaine d'application est constitué par des récipients ou des réacteurs chimiques destinés à être remplis par des particules solides : catalyseurs, adsorbants, réactifs, garnissages, remplissages divers...

Dans ce cas, il est presque toujours avantageux de placer le maximum de produit solide à l'intérieur du réacteur pour en augmenter l'activité par unité de volume et donc l'efficacité et la durée utile de service (durée de cycle ou durée de vie).

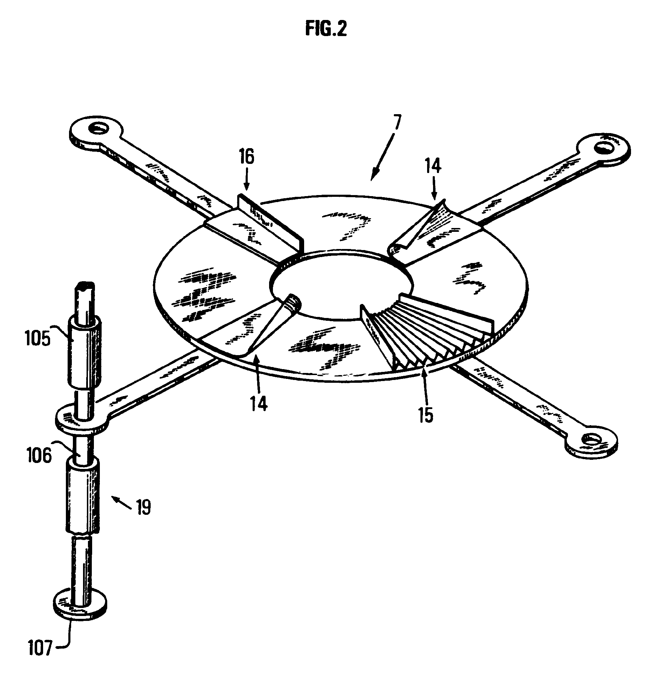

Un procédé convenable consiste à utiliser l'appareillage décrit dans le brevet français n° 2.431.449. D'autres appareillages ont déjà été décrits dans l'art antérieur, en particulier le dispositif décrit dans de brevet DE-A-2.703.329. Le brevet DE-A-2.703.329 (voir en particulier la figure 2 dudit brevet) décrit un appareillage pour le remplissage d'un récipient par un produit divisé ou des solides divisés comportant:

- une trémie (15) munie d'un moteur (M) solidaire de la trémie,
- un arbre (10) entraîné par le moteur (M), dont l'axe est sensiblement vertical,
- une tête de dispersion mise en rotation par ledit moteur, la tête de dispersion comportant au moins trois plateaux (6, 7 et 8) sensiblement parallèles et coaxiaux, et sensiblement circulaires, disposés les uns au dessous des autres et dont le rayon va en diminuant depuis de plateau supérieur (8) jusqu'au plateau inférieur (6), chaque plateau (à l'exception du plateau inférieur (6)) étant évidé par une forme d'espace annulaire, dans lequel les solides divisés s'écoulent par gravité, les espaces annulaires étant concentriques, le diamètre de chaque espace annulaire allant en diminuant depuis l'espace annulaire associé au plateau supérieur (8) jusqu'à l'espace annulaire immédiatement au-dessus du plateau inférieur, une partie des solides divisés s'écoulant de chaque annulaire dans l'espace annulaire concentrique immédiatement en-dessous, une autre partie des solides s'écoulant de chaque espace annulaire sur le plateau (6-7) au-dessus duquel il débouche, les solides divisés qui tombent sur ce plateau (6-8) étant soumis à un mouvement rotatif dû à la rotation du plateau (6-8) sur lequel ils sont tombés, la force centrifuge engendrée par la rotation des plateaux (6-8) à partir duquel les solides sont éjectés dans l'enceinte à remplir. Mais l'appareil de la présente invention présente d'autres avantages, et notamment des avantages particuliers que l'on comprendra mieux dans la description qui suit.

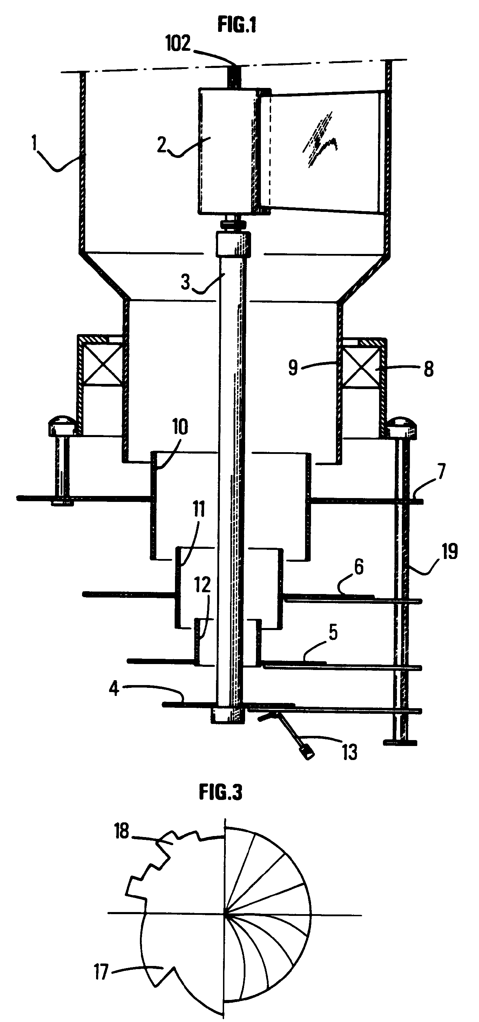

La figure 1 illustre l'invention. L'appareil est constitué d'une trémie d'alimentation fixe (1) renfermant de préférence en son centre un moteur (2) par exemple pneumatique, alimenté éventuellement par un gaz (de l'air par exemple). Ce moteur est solidaire de la trémie. Le moteur (2) entraîne un arbre (3) qui met en rotation une tête de dispersion à laquelle cet arbre est fixé. Cette tête de dispersion comporte au moins deux plateaux, de préférence au moins trois ou quatre plateaux. Sur la figure 1, on a représenté quatre plateaux (4), (5), (6) et (7), généralement solidaires entre eux, par exemple par l'intermédiaire d'un support, par exemple la tige (19) sur la figure 1.

Les solides pulvérulents s'écoulent par gravité de haut en bas à travers une série de tubes (au moins deux tubes, et de préférence au moins 3 ou 4) concentriques et dont de diamètre diminue de haut en bas. Ainsi les solides s'écoulent d'abord dans le tube (9) puis dans des tubes concentriques coaxiaux (10), (11) et (12) de diamètre de plus en plus petit. Ces tubes peuvent être démontables et coulissants si nécessaires, et sont caractéristiques de la présente invention.

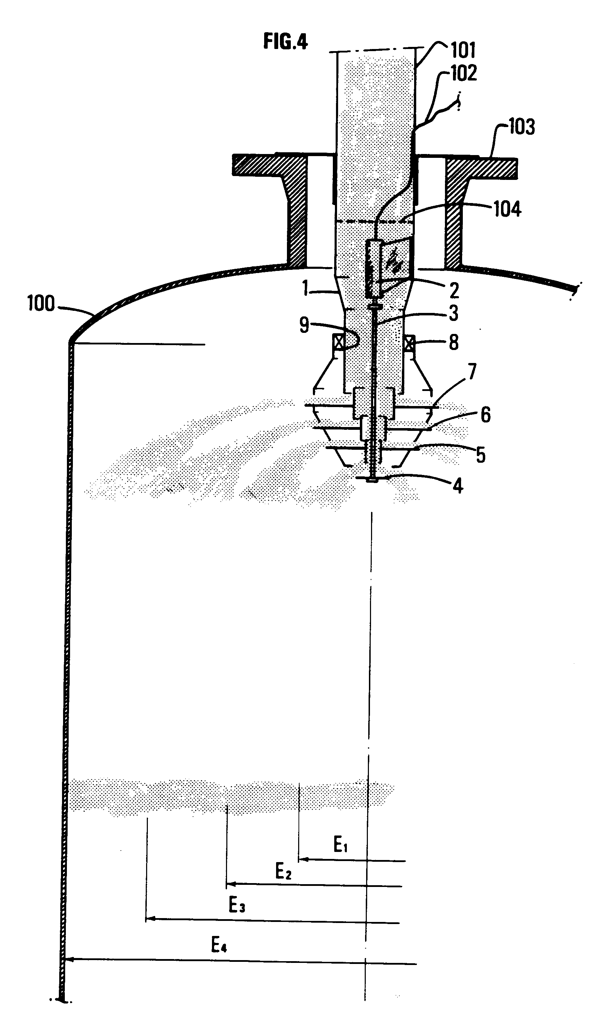

A chaque changement de tube, une partie au moins des solides granuleux tombent sur un des plateaux (7), (6), (5) et (4). Le plateau (7) tourne autour du tube (10) et il est alimenté par le tube de descente (9), fixe de préférence et relié lui-même au palier (8). Les autres tubes de descente des solides (10), (11) et (12), fixes ou mûs d'un faible mouvement de rotation de préférence, et de diamètre de plus en plus petit, créent des espaces annulaires concentriques permettant aux grains ou aux solides granuleux d'alimenter respectivement les plateaux (6), (5) et (4). Les plateaux (6) et (5) tournent respectivement autour des tubes (10), (11) et (12). Le plateau (4) tourne autour de l'arbre (3). Sous l'effet de la force centrifuge, les particules solides sont projetées dans le volume à remplir. Les plateaux (7), (6), (5), (4) pourront être équipés (voir figure 2) d'au moins un déflecteur. Lorsqu'on utilise plusieurs déflecteurs, ceux-ci peuvent être identiques ou différents, souples ou durs (tels(s) que (14), (15), (16) sur la figure 2, dont l'usage est de favoriser la dispersion et la projection des grains). La figure 2 représente un plateau, ici le plateau 7, en perspective. Ces déflecteurs auront des formes variées et adéquates à la forme des particules pulvérulentes. Les rayons des plateaux pourront être réglables, c'est-à-dire augmentés ou diminués pour créer ou pour augmenter la largeur de la couronne de solides projetée au fond du récipient (par exemple couronnes E1, E2, E3 et E4 sur la figure 4). On dispose ainsi de plateaux facilement adaptables ou modifiables pour des essais préliminaires de remplissage. Les plateaux peuvent avoir une surface continue ou discontinue. La figure 3 illustre un plateau sur les 4 cas suivants : déflecteur (18) de la figure 2. déflecteur (16) de la figure 2, plateau avec stries droites ou courbes, plateau à surface ondulée (pour un meilleur accrochage des solides.

Le plateau inférieur ((4) sur les figures 1 et 4) pourra être équipé d'un système auto régulant de débit (avec ouverture automatique) s'adaptant à la vitesse de rotation ou de remplissage (masselottes (13) sur la figure 1). Le même principe pourra équiper les autres plateaux.

En bref, l'invention concerne un appareillage pour le remplissage d'un récipient par un produit divisé ou des solides divisés comportant (voir figure 1):

- une trémie (1) munie d'un moteur (2) solidaire de la trémie.
- un arbre (3) sensiblement vertical entraîné par le moteur,
- une tête de dispersion mise en rotation par le dit moteur, la tête de dispersion comportant au moins deux plateaux, de préférence au moins 3 ou 4 (tels que (7), (6), (5) et (4)) sensiblement parallèles et coaxiaux, et sensiblement circulaires, disposés les uns au dessous des autres et dont le rayon va en diminuant depuis le plateau supérieur jusqu'au plateau inférieur,
- une série d'au moins trois tubes, de préférence au moins 4, tels que (9), (10), (11) et (12) sensiblement en forme de cylindres concentriques, empilés et coaxiaux éventuellement démontables et coulissants, dans lesquels les solides divisés s'écoulent par gravité, chaque cylindre ayant son extrémité inférieure au dessus d'un plateau, chaque cylindre sauf le le plus haut ayant son extrémité supérieure sensiblement au niveau de l'extrémité inférieure du cylindre situé au dessus, le diamètre de chaque tube étant inférieur au diamètre du tube qui le surmonte et supérieur au diamètre du tube qu'il surmonte, chaque plateau étant ainsi associé à un tube autour duquel il tourne, le plateau inférieur tournant autour de l'arbre (3), une partie des solides divisés s'écoulant de chaque tube dans le tube immédiatement en dessous, une autre partie des solides s'écoulant de chaque tube sur le plateau au dessus duquel il débouche, les solides divisés qui tombent sur ce plateau étant soumis à un mouvement rotatif dû à la rotation du plateau sur lequel ils sont tombés, la force centrifuge engendrée par la rotation des plateaux permettant d'éjecter les solides à des distances différentes de l'axe de l'arbre, sensiblement proportionnelles au rayon du plateau à partir duquel les solides ont été projetés dans l'enceinte à remplir.

A noter que sur la figure 2, on a également représenté pour le plateau (7) la tige (19) solidaire du plateau 7 et comportant notamment une entretoise (105), une une filetée (106) et le support (107) pour le repos de l'appareil au sol.

A titre indicatif, la vitesse de rotation d'un plateau peut varier entre 15 et 780 tours par minute.

La figure 4 illustre également l'invention. On a représenté un récipient (100) que l'on veut remplir de solides pulvérulents à l'aide de l'appareillage selon l'invention. La conduite (101) permet d'introduire les solides granuleux dans l'appareillage selon l'invention. Le goulot (103) (ou bride de réacteur) permet de fixer l'appareillage selon l'invention dans la partie supérieure de l'enceinte (100). Généralement, une grille (104) peut faciliter l'écoulement des solides vers l'appareillage selon l'invention. Cette figure 4 montre clairement que chaque plateau (ou étage) arrose sa propre couronne au fond du récipient, lequel se remplit ainsi peu à peu de façon homogène.

Les avantages d'un tel système sont essentiellement les suivants :

- compacité,
- simplicité,
- sécurité intrinsèque (l'arrêt du fluide pneumatique stoppe la rotation des plateaux, donc l'écoulement),
- ventilation du milieu par la forme des plateaux déflecteurs et élimination des fines,
- homogénéité du remplissage et gain de volume élevé,
- grande plage de débits possible pour un même appareil grâce à la flexibilité ∅ trémie et ∅ plateau,
- contrôle aisé de la vitesse de rotation,
- contrôle du débit indépendant de la vitesse de rotation,
- variation du débit en continu.

La conception du système permet d'accepter le chargement de solides divisés de densité élevée (tels que catalyseurs lourds de densité comprise entre 2 et 4. De plus le chargement de catalyseurs poussiéreux se fait sans présence humaine à l'intérieur du réacteur.

On réalise ainsi des gains de remplissage de l'ordre de 10 à 35 % par rapport aux systèmes de l'art antérieur.

L'invention convient particulièrement bien pour alimenter en catalyseur les réacteurs de reformage, de production d'hydrocarbures aromatiques à partir de diverses charges par exemple $C_2$-$C_3$, $C_2$-$C_5$, $C_2$-$C_7$, $C_5$-$C_7$, $C_2$-$C_{10}$ etc... avec des catalyseurs de type reformage ou avec des catalyseurs à base de zéolites de type MFI contenant ou non divers promoteurs, tels que par exemple le gallium.

Dans la présente invention, on a également découvert que la répartition du catalyseur dans le récipient était plus régulière en utilisant, dans l'appareillage de la demande principale, au moins trois plateaux de forme elliptique.

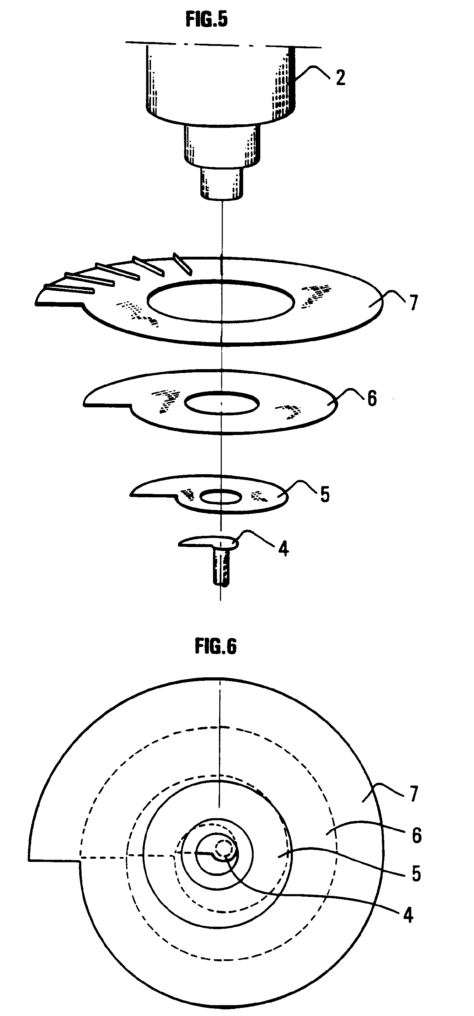

La figure 5 illustre l'appareillage, lorsque le mode de réalisation de l'appareillage correspond à une forme spiralée.

Chaque plateau 4, 5, 6, 7, (alimenté par un moteur (2)) a une forme de spirale. La spirale peut être de forme continue. La continuité se fera d'un plateau à un autre ; ainsi qu'indiqué plus haut, pour un plateau intermédiaire, le rayon le plus court de la spirale pourra correspondre au rayon le plus long de la spirale du plateau du dessous. Le rayon le plus long correspond au rayon le plus court de la spirale du plateau du dessus.

Les plateaux pourront être pourvus de lamelles, (tubes ou profilés notamment) par exemple des lamelles radiales plates ou des lamelles radiales incurvées.

La figure 5 illustre une vue éclatée des plateaux. La figure 6 illustre la vue aérienne des plateaux, montrant ainsi l'aspect continu d'une spirale unique.

EXEMPLES

Le tableau suivant donne pour divers solides pulvérulents d'une part la densité de remplissage obtenue lorsque les solides divisés sont versés en vrac dans un récipient, et d'autre part lorsqu'ils sont introduits dans le récipient conformément à la présente invention.

| Produit | Forme | Dimension mm | Densité de rempl. en vrac en Kg/litre | Densité obtenue selon l'invention en Kg/litre | Gain de volume |
|---|---|---|---|---|---|
| Catalyseur de reformage | extrudé | Ø = 1,2 l = 4 à 6 | 0,65 | 0,765 | 22 % |
| Catalyseur quadrilobe | extrudé | Ø = 1,5 l = 7 à 10 | 0,58 | 0,73 | 26 % |
| Catalyseur d'hydrogénation | billes | Ø = 2 à 4 | 0,70 | 0,77 | 10 % |
| Granulésde PVC | extrudés | Ø = 3 à 4 l = 4 à 6 | 1,20 à 1,93 | 1,5 à 2,3 | 19 à 25 % |
| Engrais | granulé | Ø = 1,5 à 4,5 | 0,85 à 1,05 | 0,98 à 1,21 | 15 à 16 % |
| Riz | grain long | Ø = 1,5 l = 8 à 9 | 0,75 | 0,94 | 25 % |
| Blé | grain court | Ø = 3 l = 6 à 7 | 0,76 | 0,875 | 15 % |
| Avoine | grain long | Ø = 2 à 3 l = 8 à 10 | 0,56 | 0,69 | 23 % |
| Tournesol | grain convexe plat-pointu | section convexe 6 x 8 l = 10 à 12 | 0,34 | 0,39 | 15 % |
| Catalyseurs lourds | | | 2,1 à 3,5 | | 15 à 25 % selon la forme |

Il en découle une réduction de la fraction du volume intergranulaire de 20 à 50 %, donc à l'augmentation de la capacité de stockage, vient s'ajouter une diminution du volume de gaz contenu dans de milieu, et s'il y a lieu une réduction de la consommation de gaz nécessaireà inerter le milieu.

## Revendications

1. Appareillage pour le remplissage d'un récipient par un produit divisé ou des solides divisés comportant :
   - **une trémie** (1) munie d'un moteur (2) solidaire de la trémie,
   - **un arbre** (3) sensiblement vertical entraîné par le moteur,
   - **une tête de dispersion** mise en rotation par le dit moteur, la tête de dispersion comportant au moins trois plateaux (tels que (7), (6), (5) et (4)) sensiblement parallèles et coaxiaux, et sensiblement de l'une des formes suivantes : circulaire, elliptique, spiralée, disposés les uns au dessous des autres et dont le rayon va en diminuant depuis le plateau supérieur jusqu'au plateau inférieur,
   - **une série d'au moins trois tubes** (tels que (9), (10), (11) et (12)) sensiblement en forme de cylindres concentriques, empilés et coaxiaux, coulissants, dans lesquels les solides divisés s'écoulent par gravité, chaque cylindre ayant son extrémité inférieure au dessus d'un plateau, chaque cylindre sauf le plus haut ayant son extrémité supérieure sensiblement au niveau de l'extrémité inférieure du cylindre situé au dessus, le diamètre de chaque tube, à l'exception du tube supérieur, étant inférieur au diamètre du tube qui le surmonte et, à l'exception du tube inférieur, supérieur au diamètre du tube qu'il surmonte, chaque plateau, à l'exception du plateau inférieur, étant ainsi associé à un tube autour duquel il tourne, le rayon du tube étant inférieur à la plus petite distance entre le bord extérieur du plateau et l'axe autour duquel ledit plateau tourne, le plateau inférieur tournant autour de l'arbre (3), une partie des solides divisés s'écoulant de chaque tube, à l'exception du tube inférieur, dans le tube immédiatement en dessous, une autre partie des solides s'écoulant de chaque tube sur le plateau au dessus duquel il débouche, les solides divisés qui tombent sur ce plateau étant soumis à un mouvement rotatif dû à la rotation du plateau sur lequel ils sont tombés, la force centrifuge engendrée par la rotation des plateaux permettant d'éjecter les solides à des distances différentes de l'axe de l'arbre, sensiblement proportionnelles au rayon du plateau à partir duquel les solides ont été projetés dans l'enceinte à remplir.

2. Appareillage selon la revendication 1 dans lequel les tubes concentriques ne peuvent pas avoir de mouvement rotatif relatif par rapport à la tête de dispersion, autour de l'axe vertical.

3. Appareillage selon la revendication 1 dans lequel les tubes concentriques peuvent avoir un mouvement rotatif relatif par rapport à la tête de dispersion se faisant autour du même axe vertical.

4. Appareillage selon l'une des revendications 1 et 3 dans lequel au moins un plateau est muni d'au moins un déflecteur.

5. Appareillage selon la revendication 4 dans lequel on peut faire varier la longueur du rayon d'au moins un plateau.

6. Appareillage selon l'une des revendications 1 à 5 dans lequel le plateau inférieur est équipé d'un système autorégulant de débit d'adaptation à la vitesse de rotation ou de remplissage.

7. Appareillage selon l'une des revendications 1 à 6 dans lequel chacun des plateaux est équipé du même système autorégulant.

8. Appareillage selon la revendication 7 dans lequel le dit système autorégulant est composé de masselottes.

9. Appareillage selon l'une des revendications 1 à 8 comportant plus particulièrement au moins trois plateaux (tels que (7), (6), (5) et (4) (voir figure 5)), sensiblement parallèles et coaxiaux, et sensiblement elliptiques, disposés les uns au dessous des autres et dont le rayon va en diminuant depuis le plateau supérieur jusqu'au plateau inférieur.

## Patentansprüche

1. Vorrichtung zum Befüllen eines Behälters mit einem stückigen Produkt oder stückigen Feststoffen, die folgendes umfaßt:
   - einen Trichter (1), der mit einem Motor (2) versehen ist, der mit dem Trichter fest verbunden ist,
   - eine genau vertikale Welle (3), die durch den Motor (2) angetrieben wird,
   - einen Verteilerkopf, der durch den besagten Motor in Rotation versetzt wird, wobei der Verteilerkopf mindestens drei Platten umfaßt, (wie zum Beispiel (7), (6), (5) und (4)), die genau parallel und koaxial angeordnet sind und genau eine der folgenden Formen besitzen, nämlich: kreisförmig, elliptisch, spiralförmig, die Platten sind untereinander angeordnet, und ihr Radius verkleinert sich von der obersten Platte zur untersten Platte immer weiter,
   - eine Folge von mindestens drei Röhren (wie zum Beispiel (9), (10), (11) und (12)), die genau die Form von konzentrischen Zylindern besitzen, gestapelt und koaxial, verschiebbar, in denen die stückigen Feststoffe durch ihr Gewicht herunterfallen, wobei das untere Ende eines jeden Zylinders sich über einer Platte befindet und das obere Ende eines jeden Zylinders außer dem obersten sich genau auf Höhe des unteren Endes des darüberliegenden Zylinders befindet, und wobei der Durchmesser jeder Röhre mit Ausnahme der obersten Röhre kleiner ist als der Durchmesser der Röhre, die über ihr steht, mit Ausnahme der untersten Röhre, größer ist als der Durchmesser der Röhre, über der sie steht und so ist jede Platte, mit Ausnahme der untersten Platte, mit einer Röhre verbunden, um die sie sich dreht; wobei der Radius der Röhre kleiner ist als der kleinste Abstand zwischen dem äußeren Rand der Platte und der Achse, um die sich die besagte Platte dreht, die unterste Platte dreht sich um die Welle (3); ein Teil des stückigen Feststoffs fällt von jeder Röhre, mit Ausnahme der untersten Röhre, in die Röhre direkt darunter, ein anderer Teil des Feststoffes fällt von jeder Röhre auf die Platte, über der sie mündet, die stückigen Feststoffe, die auf diese Platte fallen, werden einer Rotationsbewegung aufgrund der Rotation der Platte, auf die sie gefallen sind, unterworfen; die Zentrifugalkraft, die durch die Rotation der Platten erzeugt wird, ermöglicht es, die Feststoffe in unterschiedlichen Abständen zur Achse der Welle auszuschleudern, die genau proportional zum Radius der Platte sind, von der aus die Feststoffe in den zu befüllenden Behälter ausgeworfen worden sind.

2. Vorrichtung gemäß Anspruch 1), bei der die konzentrischen Röhren keine relative Rotationsbewegung um die vertikale Achse, bezogen auf den Verteilerkopf, ausführen können.

3. Vorrichtung gemäß Anspruch 1), bei der die konzentrischen Röhren eine relative Rotationsbewegung um dieselbe vertikale Achse, bezogen auf den Verteilerkopf, ausführen können.

4. Vorrichtung gemäß einem der Ansprüche 1 und 3, bei der mindestens eine Platte mit mindestens einer Ablenkvorrichtung versehen ist.

5. Vorrichtung gemäß Anspruch 4, bei der die Größe des Radius von mindestens einer Platte variiert werden kann.

6. Vorrichtung gemäß einem der Ansprüche 1 bis 5, bei der die unterste Platte mit einem den Durchsatz selbstregulierenden System ausgestattet ist, das sich an die Rotationsgeschwindigkeit oder an den Füllstand anpaßt.

7. Vorrichtung gemäß einem der Ansprüche 1 bis 6, bei der jede der Platten mit dem gleichen selbstregulierenden System ausgerüstet ist.

8. Vorrichtung gemäß Anspruch 7, bei dem das besagte selbstregulierende System aus Speisern besteht.

9. Vorrichtung gemäß einem der Ansprüche 1 bis 8, die im besonderen mindestens drei Platten (wie zum Beispiel (7), (6), (5) und (4) (siehe Abbildung 5)) umfaßt, die genau parallel und koaxial und genau elliptisch sind und untereinander angeordnet sind und deren Radius sich von der obersten zur untersten Platte immer weiter verringert.

## Claims

1. An apparatus for filling a receptacle with a divided product or divided solids and comprising
   - a hopper (1) fitted with a motor (2) rigid with the hopper,
   - a substantially vertical shaft (3) driven by the motor,
   - a dispersion head which is caused to rotate by the said motor, the dispersion head comprising at least three plates (such as (7), (6), (5) and (4)) which are substantially parallel and coaxial and substantially in one of the following shapes: circular, elliptical, spiral, disposed beneath one another and the radius of which decreases from the top plate to the bottom plate,
   - a series of at least three tubes(such as (9), (10), (11) and (12)) of substantially concentric cylindrical form, stacked and coaxial, adapted for sliding movement, in which the divided solids flow by gravity, each cylinder having its bottom end above a plate, each cylinder except the highest having its upper end substantially at the level of the bottom end of the cylinder situated above, the diameter of each tube with the exception of the top tube being less than the diameter of the tube which surmounts it and, with the exception of the bottom tube, greater than the diameter of the tube which it surmounts, each plate, with the exception of the bottom plate, being thus associated with a tube about which it rotates, the radius of the tube being less than the smallest distance between the outer edge of the plate and the axis about which the said plate rotates, the bottom plate turning about the shaft (3), a part of the divided solids flowing from each tube, with the exception of the bottom tube, into the tube immediately underneath, another part of the solids flowing from each tube onto the plate on top of which it discharges, the divided solids which fall onto this plate being subjected to a rotary movement due to the rotation of the plate onto which they have fallen, the centrifugal force generated by the rotation of the plates making it possible to eject the solids at different distances from the axis of the shaft, substantially proportional to the radius of the plate from which the solids have been projected into the enclosure to be filled.

2. An apparatus according to Claim 1 in which the concentric tubes cannot enjoy a relative rotary movement in respect of the dispersion head and about the vertical axis.

3. An apparatus according to Claim 1 in which the concentric tubes may enjoy a relative rotary movement about the same vertical axis and in relation to the dispersion head.

4. An apparatus according to one of Claims 1 and 3 in which at least one plate is fitted with at least one deflector.

5. An apparatus according to Claim 4 in which it is possible to vary the length of the radius of at least one plate.

6. An apparatus according to one of Claims 1 to 5 in which the bottom plate is equipped with an automatic flow-regulating system for adaptation to the speed of rotation or filling.

7. An apparatus according to one of Claims 1 to 6 in which each of the plates is equipped with the same auto-regulating system.

8. An apparatus according to Claim 7 in which the said auto-regulating system is composed of feed heads.

9. An apparatus according to one of Claims 1 to 8, comprising more particularly at least three plates (such as (7), (6), (5) and (4) (see Fig. 5)) substantially parallel and coaxial and substantially elliptical, disposed one beneath the other and of which the radius decreases from the top plate down to the bottom plate.

FIG.1

102
1
2
3
9
8
10
7
11
19
6
12
5
4
13

FIG.3

18
17

FIG.2

7
16
14
105
14
15
106
19
107

FIG.4
101
102
103
104
100
1
2
3
9
8
7
6
5
4
E1
E2
E3
E4

FIG.5

2
7
6
5
4

FIG.6

7
6
5
4